# EUROPÄISCHE PATENTSCHRIFT

(11) **EP 2 057 881 B1**
(45) Veröffentlichungstag und Bekanntmachung des Hinweises auf die Patenterteilung: **20.10.2010**
(21) Anmeldenummer: 08161827.4
(22) Anmeldetag: 05.08.2008
(51) Int. Cl.: A01D 41/127, A01D 69/06

(54) **Motorregelung einer selbstfahrenden Arbeitsmaschine**
Motor regulation of a self-propelled working machine
Réglage de moteur d'une machine de travail automatique

(30) Priorität: 07.11.2007 DE 102007053436
(43) Veröffentlichungstag der Anmeldung: 13.05.2009
(73) Patentinhaber: CLAAS Selbstfahrende Erntemaschinen GmbH, 33428 Harsewinkel (DE)
(72) Erfinder: Hugenroth, Ludger, 48346 Ostbevern (DE); Zegota, Thomas, 33428 Harsewinkel (DE); Haverkamp, Michael, 48346 Ostbevern (DE); Verhorst, Jan-Willem, 33142 Büren (DE)

(56) Entgegenhaltungen:
- EP-A- 0 105 515
- EP-A- 1 609 349
- EP-A- 1 818 524
- DE-A1- 3 810 724
- DE-A1- 19 857 046

## Beschreibung

Die Erfindung betrifft eine selbstfahrenden Arbeitsmaschine mit einer Motorregelung, ein Verfahren zum Betreiben einer solchen Arbeitsmaschine und eine Verwendung dieser Arbeitsmaschine in einem Verfahren nach den Oberbegriffen des Ansprüche 1 und 11.

Aus der DE 38 10 724 ist eine Motorregelungsanordnung bekannt geworden, die sicherstellen soll, dass beim Betreiben des Antriebsmotors aus Gründen der Kraftstoffeinsparung in einem Teillastbereich bei niedrigerer Motordrehzahl, die Arbeitsorgane stets mit konstanter Drehzahl arbeiten, unabhängig davon, ob der Antriebsmotor mit höherer oder niedrigerer Motordrehzahl betrieben wird. In einer ersten Ausführungsform schlägt die DE 38 10 724 eine Struktur vor, in der jedem Arbeitsorgan dezentral ein Drehmomentwandler zugeordnet ist, sodass jedes Arbeitsorgan individuell an die geänderte Motordrehzahl anpassbar ist. Neben hohen Kosten für die Anordnung der dezentralen Drehzahlwandler wird hier ein aufwendige Steuerungstechnik erforderlich, da jedes Arbeitsorgan separat überwacht und definiert angesteuert werden muss. Aus diesem Grund schlägt das Dokument in einer weiteren Ausgestaltungsvariante vor, einen einzigen zentralen Getriebeblock vorzusehen, der unmittelbar in den Antriebsstrang zwischen dem Antriebsmotor und der Vielzahl von Arbeitsorganen, den Verbrauchern, angeordnet ist und durch geeignete elektronische Steuereinrichtung die Drehzahl des Antriebsstranges unmittelbar an die geänderte Motordrehzahl anpasst, wobei das Zentralgetriebe als Lastschaltgetriebe ausgeführt ist. Eine solche Ausgestaltung hat einerseits den Vorteil, dass die Arbeitsorgane während des Schaltvorganges nicht ausgekuppelt werden müssen. Wegen der begrenzten Schaltstufen eines Lastschaltgetriebes sind Änderungen der Motordrehzahl jedoch nur eingeschränkt möglich.

Demgegenüber offenbart die EP 1 609 349 eine Motordrehzahlsteuerung, bei der die Ausgangswelle des Antriebsmotors unmittelbar mit dem Sonnenrad eines Planetengetriebes gekoppelt ist, während andererseits ein mit dem Hohlrad gekoppelter Hydromotor eine Drehzahlähderung der Ausgangswelle des Planetengetriebes bewirkt. Durch die Koppelung des Planentengetriebes unmittelbar mit dem Antriebsmotor und einem hydraulischen Antrieb ergibt sich die Struktur eines hydraulisch-mechanisch leistungsverzweigten Getriebes, dessen Wirkungsgrad wegen der im hydraulischen Zweig auftretenden Leistungsverluste gegenüber rein mechanischer Energieübertragung deutlich geringer ist. Dies führt dazu, dass der Antriebsmotor in einem Drehmomentbereich betrieben werden muss, der regelmäßig auch einen höheren Nenndrehzahlbereich des Antriebsmotors erfordert, was letztlich zu einem höhern Kraftstoffbedarf führt.

Es ist deshalb Aufgabe der Erfindung die beschriebenen Nachteile des Standes der Technik zu vermeiden und insbesondere eine Motorregelung für selbstfahrende Arbeitsmaschinen vorzuschlagen, die einen optimalen, einen niedrigen Kraftstoffverbrauch nach sich ziehenden Betrieb eines Antriebsmotors bewirkt.

Diese Aufgabe wird erfindungsgemäß durch die kennzeichnenden Merkmale der Ansprüche 1 und 11 gelöst.

Indem die Motorregelung einer selbstfahrenden Arbeitsmaschine mit zumindest einem in der Drehzahl regelbaren Antriebsmotor und in den Drehzahlen einstellbar angetriebenen Arbeitsorganen, die mit diesem über einen Antriebsstrang gekoppelt sind und der Antriebsstrang zumindest eine Getriebestufe umfasst, die die Antriebsdrehzahl des oder der Arbeitsorgane dadurch konstant hält, dass die zumindest eine Getriebestufe als mechanisch-mechanisch leistungsverzweigtes Getriebe ausgeführt ist, wird sichergestellt, dass der Antriebsmotor in einem kraftstoffsparenden Drehzahlbereich betreibbar ist, ohne dass dies einen Einfluss auf die Arbeitsdrehzahlen der Arbeitsorgane hat.

In einer vorteilhaften Ausgestaltung der Erfindung ist die Eingangswelle der Getriebestufe mit der Ausgangswelle des zumindest einen Antriebsmotors und die Ausgangswelle der Getriebestufe mit dem Antriebsstrang zumindest eines Arbeitsorgans gekoppelt und wobei die Änderung der Motordrehzahl eine Änderung der Drehzahl der Ausgangswelle der Getriebestufe bewirkt und die Änderung der Drehzahl der Ausgangswelle der Getriebestufe in einem Drehzahlbereich stufenlos umgesetzt wird. Eine solche Ausgestaltung hat insbesondere die Vorteile, dass über einen großen Motordrehzahlbereich die Abtriebsdrehzahl der Ausgangswelle der Getriebestufe konstant gehalten werden kann und die Motordrehzahl in beliebigen Drehzahlstufen änderbar ist.

Eine technisch einfach umsetzbare Ausgestaltung des stufenlos verstellbaren mechanisch - mechanisch leistungsverzweigten Getriebes ergibt sich dann, wenn das leistungsverzweigte Getriebe ein Zugmittelgetriebe zur drehzahlkonstanten Übertragung eines Anteils der Antriebsleistung und ein Stufenlosgetriebe zur drehzahlvariablen Übertragung eines weiteren Anteils der Antriebsleistung umfasst und wobei die Leistungsanteile in einem Summiergetriebe des leistungsverzweigten Getriebes zusammengeführt werden, Eine hohe Funktionssicherheit der Getriebestufe wird vorteilhafter Weise dadurch den Einsatz bewährter Getriebestrukturen erreicht, nämlich dass das Zugmittelgetriebe als Riementrieb, das Stufenlosgetriebe als Variatorantrieb und das Summiergetriebe als Planetengetriebe ausgeführt sind.

Eine sehr kompakte, wenig Getriebeglieder erfordernde Ausgestaltung ergibt sich dann, wenn die der Ausgangswelle des Getriebes zugeordnete Riemenscheibe des Zugmittelgetriebes drehfest mit dem Hohlrad des Planetengetriebes und die der Ausgangswelle des Getriebes zugeordnete Variatorscheibe des Variatorgetriebes drehfest mit dem die Planetenräder tragenden Stegrad des Planetengetriebes verbunden sind und wobei jeweils die weiter Riemenscheibe des Zugmittelgetriebes und die weitere Variatorscheibe des Variatorgetriebes drehfest mit der Ausgangswelle des wenigstens einen Antriebsmotor gekoppelt sind. Auf diese Weise werden eine separate Getriebeeingangswelle und Zwischenübertragungsglieder entbehrlich.

Unter dem Gesichtspunkt der Vorfertigung von Modulen kann es aber gemäß einer vorteilhaften Weiterbildung der Erfindung von Vorteil sein, wenn die drehfest mit den Ausgangswelle des wenigstens einen Antriebsmotor gekoppelte weiter Riemenscheibe des Zugmitteigetriebes und die weitere Variatorscheibe des Variatorgetriebes über eine der Getriebestufe zugeordnete Eingangswelle drehfest mit der Ausgangswelle des zumindest einen Antriebsmotors verbunden sind. Auf diese Weise kann das erfindungsgemäße Getriebe als separate Baugruppe unabhängig von den übrigen Komponenten vorgefertigt werden.

Damit nun die Anpassung der Motordrehzahl weitgehend automatisiert werden kann ist in einer weiteren vorteilhaften Ausgestaltung der Erfindung vorgesehen, dass eine Steuer- und Regeleinrichtung vorgesehen ist, die den Leistungsbedarf des Antriebsstranges und/oder der Arbeitsorgane ermittelt und unter Berücksichtigung der Motorkennlinien und der Kraftstoffverbrauchskennlinien des oder der Antriebsmotoren und der erforderlichen Motorleistung eine Motordrehzahl im Teillastbereich mit dem niedrigsten spezifischen Kraftstoffverbrauch ansteuert.

Im einfachsten Fall wird das Einhalten einer nahezu konstanten Abtriebsdrehzahl der Ausgangswelle der Getriebestufe dadurch erreicht, dass in dem Verhältnis wie die Motordrehzahl erhöht oder abgesenkt wird die Drehzahl der Abtriebswelle der zumindest einen Getriebestufe abgesenkt oder erhöht wird.

Je nach dem verfügbaren Bauraum und den zu überbrückenden Entfernungen zwischen dem Antriebsmotor und den Arbeitsorganen kann in einer weiteren vorteilhaften Ausgestaltung der Erfindung das leistungsverzweigte Getriebe ein als Zahnradgetriebe zur drehzahlkonstanten Übertragung eines Anteils der Antriebsleistung und ein als Kettenwandler ausgeführtes Stufenlosgetriebe zur drehzahlvariablen Übertragung eines weiteren Anteils der Antriebsleistung umfassen und wobei die Leistungsanteile in einem Summiergetriebe des leistungsverzweigten Getriebes zusammengeführt werden.

Denkbar ist auch jedem Arbeitsorgan dezentral ein Stufenlosgetriebe zur Drehzahlanpassung zugeordnet, sodass jedes Arbeitsorgan individuell an die Änderung der Motordrehzahl angepasst werden, sodass schließlich ein kostenintensives Summiergetriebe entbehrlich wird.

Indem die Motorregelung die Motordrehzahl des zumindest einen Antriebsmotors solange konstant hält, bis ein Leistungsbedarfsschwellwert erreicht wird und erst beim Überschreiten dieses Leistungsbedartsschwellwertes in eine nächste Motordrehzahlstufe umschaltet, wird sichergestellt, dass das Beibehalten einer nahezu konstanten Abtriebsdrehzahl an der Ausgangswelle der Getriebestufe durch ein Minimum an Drehzahlwechseln umgesetzt wird.

Damit auch bei kurzzeitig auftretenden Belastungsspitzen an den verschiedenen Arbeitsorganen stets sichergestellt ist, dass der Antriebsmotor nicht abgewürgt wird, liegt in einer vorteilhaften Ausgestaltung der Erfindung der Leistungsbedarfsschwellwert unterhalb der Abregelkennlinie des jeweiligen Antriebsmotors. Vorzugsweise liegt der Leistungsbedarfsschwellwert etwa 20 % unterhalb der Abregelkennlinie des jeweiligen Antriebsmotors.

Je nachdem, ob der Antriebsmotor in seinem momentanen Betriebspunkt unterlastet oder eher überlastet ist, sieht ein vorteilhafte Ausgestaltung der Erfindung vor, dass in Abhängigkeit von dem Leistungsbedarf bei Erreichen des Leistungsbedarfschwellwertes in eine höhere oder niedrigere Motordrehzahl umgeschaltet wird. Die Umschaltung der Motordrehzahl und analog der Drehzahl des Stufenlosgetriebes wird dabei vorteilhafter Weise durch die Motorsteuereinheit und/oder die Steuer- und Regeleinheit bewirkt.

Damit der Wirkungsgrad in dem gesamt nutzbaren Motordrehzahlbereich möglichst hoch ist nimmt in einer vorteilhaften Ausgestaltung der Erfindung der Leistungsanteil des Stufenlosgetriebes mit zunehmender Motordrehzahl ab.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte erfindungsgemäße selbstfahrende Arbeitsmaschine
- Figur 2: eine schematische Darstellung der erfindungsgemäßen Antriebsstrangstruktur
- Figur 3: eine Darstellung des erfindungsgemäßen Verfahrens anhand eines Motokennliniendiagramms

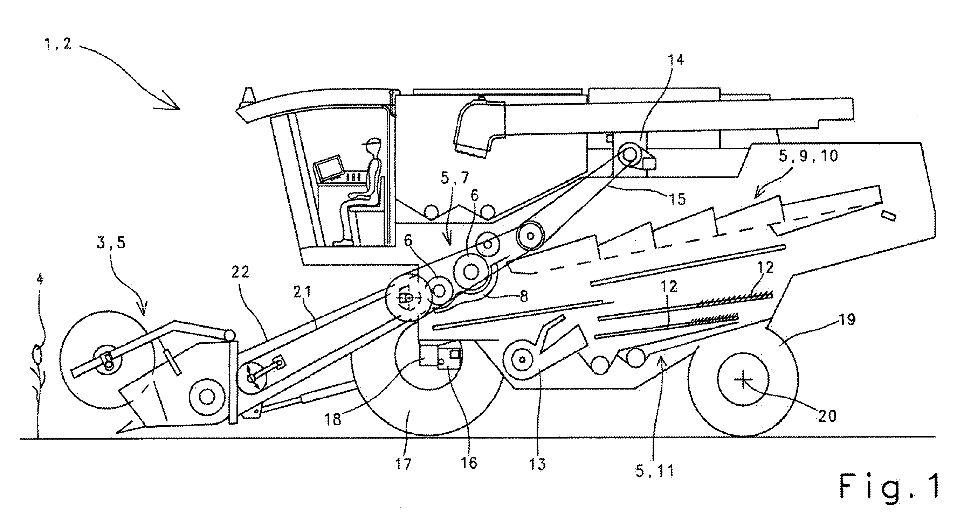

Fig. 1 zeigt eine als Mähdrescher 2 ausgeführte selbstfahrende Arbeitsmaschine 1, die in an sich bekannter Weise frontseitig ein Getreideschneidwerk 3 zum Ernten und Fördern von Erntegut 4 aufnimmt. Zur Bearbeitung des Erntegutes 4 verfügt der Mähdrescher 2 über verschiedenste Arbeitsorgane 5, die in dem dargestellten Ausführungsbeispiel ein aus ein oder mehreren, von Dreschkörben 8 teilweise ummantelten Dreschtrommeln 6 bestehendes Dreschorgan 7, eine dem Dreschorgan 7 nachgeordnete, als Hordenschüttler 9 ausgeführte Trenneinrichtung 10 sowie eine der Trenneinrichtung 10 untenseitig zugeordnete Reinigungseinrichtung 11, verfügt. Während das Dreschorgan 7 und/oder die Trenneinrichtung 10 auch als an sich bekannter und nicht dargestellter Axialrotor ausgeführt sein können, besteht die Reinigungseinrichtung 11 in der Regel aus mehreren schwingenden Siebebenen 12 sowie einem diesen zugeordneten Reinigungsgebläse 13. Weiter verfügt der Mähdrescher 2 über zumindest einen Antriebsmotor 14, der über die noch näher zu beschreibende Antriebsstrangstruktur 15 die Antriebsenergie den Arbeitsorganen 5 und einem nicht näher dargestellten Fahrantrieb 16 zum Antrieb der Laufräder 17 der Vorderachse 18 und/oder der Laufräder 19 der Hinterachse 20 bereitstellt. Zu den ebenfalls von dem Antriebsmotor 14 angetriebenen Arbeitsorganen 5 zählen auch das Getreideschneidwerk 3, sowie das dem Dreschorgan 7 vorgeordnete Schrägförderorgan 21 eines sogenannten Schrägförderers 22.

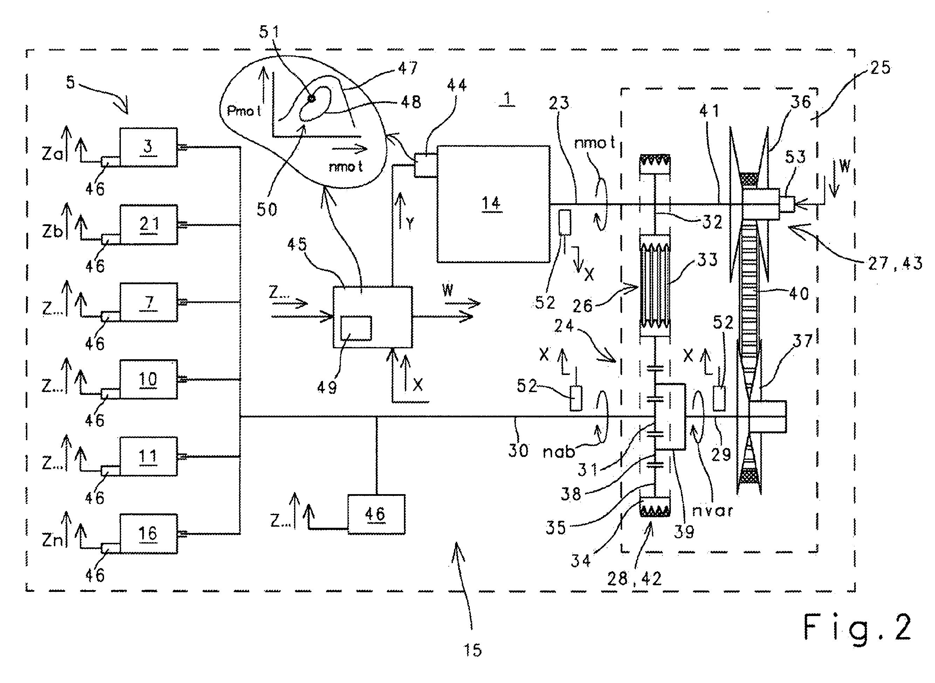

Fig. 2 beschreibt nun anhand einer schematischen Darstellung der Antriebsstrangstruktur 15 die Erfindung näher. Der Ausgangswelle 23 des zumindest einen Antriebsmotors 14 ist die noch näher zu beschreibende, als mechanisch-mechanisch leistungsverzweigtes Getriebe 25 ausgeführte Getriebestufe 24 zugeordnet. Das mechanisch-mechanisch leistungsverzeigte Getriebe 25 umfasst ein Zugmittelgetriebe 26, eine Variatorantrieb 27 sowie ausgangsseitig ein auf einer Zwischenwelle 29 angeordnetes Planetenradgetriebe 28, wobei die Ausgangswelle 30 der Getriebestufe 24 drehfest mit dem Sonnenrad 31 des Planetengetriebes 28 verbunden ist. Eine Riemenscheibe 32 des Zugmittelgetriebes 26 ist drehfest mit der Ausgangswelle 23 des Antriebsmotors 14 verbunden. Die weitere, das als Verbundriemen ausgeführte Zugmittel 33 führende Riemenscheibe 34 des Zugmittelgetriebes 26 ist drehfest mit dem Hohlrad 35 des Planetengetriebes 28 verbunden, sodass das Zugmittelgetriebe 26 seinen vom Antriebsmotor 14 abgegriffenen Leistungsanteil unmittelbar auf das Hohlrad 35 des Planetengetriebes 28 überträgt. Es liegt im Rahmen der Erfindung, dass unmittelbar die Außenkontur des Hohlrades 35 als Riemenscheibe 34 ausgebildet sein kann. Weiter ist der Ausgangswelle 23 des Antriebsmotors 14 eine Riemenscheibe 36 des Variatorantriebs 27 drehfest zugeordnet. Die weitere Riemenscheibe 37 des Variatorantriebs 27 ist drehfest mit der Zwischenwelle 29 der erfindungsgemäßen Getriebestufe 24 verbunden, die zugleich drehfest mit dem, die Planetenräder 38 aufnehmenden Stegrad 39 gekoppelt ist, sodass der von dem Verbundkeilriemen 40 des Variantorantriebs 27 übertragene Leistungsanteil des Antriebsmotors 14 unmittelbar über die Planetenräder 38 auf das Sonnenrad 31 und damit auf die Ausgangswelle 30 der erfindungsgemäßen Getriebestufe 24 übertragen wird. Damit ist die Getriebestufe 24 so strukturiert, dass sie über das Zugmittelgetriebe 26 einen Leistungsanteil des Antriebsmotors 14 mit Motordrehzahl nmot in das als so genanntes Summiergetriebe 42 fungierende Planetengetriebe 28 einleitete, während der von dem als Stufenlosgetriebe 43 fungierenden Variatorantrieb 27 in das Planetengetriebes 28 eingeleitete Leistungsanteil des Antriebsmotors 14 in der Drehzahl nvar variiert werden kann. Indem das Hohlrad 35 des Planetengetriebes 28 mit den Planetenrädern 38 und diese mit dem Sonnenrad 31 kämmen, kann die Drehzahl nab der Ausgangswelle 30 der Getriebestufe 24 so angepasst werde, dass unabhängig von einer Änderung der Motordrehzahl nmot die Ausgangswelle 30 der Getriebestufe 24 stets mit konstanter Drehzahl nab umläuft, wobei die Übertragung der Motorleistung ausschließlich mechanisch erfolgt. Möglich wird dies dadurch, dass der Variatorantrieb 27 die Variatordrehzahl nvar in einem bestimmten Bereich stufenlos ändern kann.

Es liegt im Rahmen der Erfindung, dass die dem Antriebsmotor 14 zugeordneten Riemenscheiben 32, 36, wie beschrieben, unmittelbar auf der Ausgangswelle 23 des Antriebsmotors 14 drehfest angeordnet sind oder in einer anderen Ausgestaltung auf einer Eingangswelle 41 der Getriebestufe 24 anordenbar sind, wobei in letzterem Fall dann die Eingangswelle 41 der Getriebestufe 24 drehfest mit der Ausgangswelle 23 des Antriebsmotors 14 verbunden ist.

In Fig. 2 ist weiter in schematischer Form die Antriebsstrangstruktur 15 dargestellt, die die Ausgangswelle der erfindungsgemäßen Getriebestufe 30 mit den verschiedenen Arbeitsorganen 5 der selbstfahrenden Arbeitsmaschine 1 verbindet. In an sich bekannter Weise, kann die Antriebsstrangstruktur 15 mechanische, hydraulische und/oder elektrische Energieübertragungsglieder zum Antrieb der verschiedenen Arbeitsorgane 5 umfassen. In dem dargestellten Ausführungsbeispiel, dem Mähdrescher 2, werden die diversen Arbeitsorgane 5 von dem Getreideschneidwerk 3, dem Schrägförderorgan 21, den Dreschorganen 7, der Trenneinrichtung 10, der Reinigungseinrichtung 11 und dem Fahrantrieb 16 gebildet. Es liegt im Rahmen der Erfindung, dass weitere hier nicht beschriebene Arbeitsorgane 5, wie etwa eine Strohzerkleinerungs- und Verteileinrichtung vorhanden sein können. Der zumindest eine Antriebsmotors 14 verfügt über ein sogenannte Motorsteuereinheit 44, die mit einer der selbstfahrenden Arbeitsmaschine 1 zugeordneten Steuer- und Regeleinrichtung 45 kommuniziert. In an sich bekannter Weise kann nun jedem der Arbeitsorgane 5 ein an sich bekannter Drehmomentsensor 46 zugeordnet sein, der ein Leistungsbedarfssignal Z generiert und an die Steuer- und Regeleinheit 45 übermitteln. Es liegt im Rahmen der Erfindung, dass aus Gründen der Kostenreduzierung weniger Drehmomentsensoren 46 zur Bestimmung des Leistungsbedarfs der landwirtschaftlichen Arbeitsmaschine 1 vorgesehen sind, im einfachsten Fall ist der Antriebsstrangstruktur 15 ein einziger Drehmomentsensor 46 zur Bestimmung des Gesamtleistungsbedarfs des Mähdreschers 2 zugeordnet.

Je nach Struktur der dem Antriebsmotor 14 zugeordneten Motorsteuereinheit 44 und der dem Mähdrescher 2 zugeordneten Steuer- und Regeleinheit 45 sind in der Motorsteuereinheit 44 und/oder der Steuer- und Regeleinheit 45 Motorkennlinien 47 hinterlegt, die zugleich in Abhängigkeit von der Motorleistung Pmot und dem spezifischen Kraftstoffbedarf Kraftstoffverbrauchskennlinien 48 hinterlegt. Zudem umfasst die Steuer- und Regeleinheit 45 eine Programmmodul 49, der aus den Leistungsbedarfssignalen Z und unter Berücksichtigung der Motorkennlinien 47 sowie der Kraftstoffverbrauchskennlinien 48 eine Motordrehzahl nmot zum Betreiben des zumindest einen Antriebsmotors 14 ermittelt, der eine optimale Versorgung der Arbeitsorgane 5 mit Antriebsenergie und zugleich einen niedrigen Kraftstoffverbrauch ermöglicht, Diese optimierte Motordrehzahl nmot wird über ein Steuersignal Y an die Motorsteuereinheit 44 übergeben, die dann die Kraftstoffzufuhr so regelt, dass sich die ermittelte optimierte Motordrehzahl nmot an der Ausgangswelle 23 des Antriebsmotors 14 einstellt, sodass der Antriebsmotor in einem im Teillastbereich 50 liegenden Betriebspunkt 51 betrieben wird.

Damit nun bei Änderung der Motordrehzahl nmot die Abtriebsdrehzahl nab an der Ausgangswelle 30 der erfindungsgemäßen Getriebestufe 24 konstant bleibt, muss nun im Verhältnis wie die Rotordrehzahl nmot abgesenkt wird die Variatordrehzahl nvar erhöht oder umgekehrt im Verhältnis wie die Motordrehzahl nmot erhöht wird die Variatordrehzahl nvar abgesenkt werden. In einer bevorzugten Ausführungsvariante kann dies dadurch erreicht werden, dass zunächst der Ausgangswelle 23 des Antriebsmotors 14, der Zwischenwelle 29 und der Ausgangswelle 30 des mechanisch-mechanisch leistungsverzweigten Getriebes 25 an sich bekannte und deshalb nicht näher beschriebene Drehzahlsensoren 52 zugeordnet sind, die jeweils Drehzahlsignale X generieren und an die Steuer- und Regeleinrichtung 45 übermitteln. In der Steuer- und Regeleinrichtung 45 wird aus diesen Drehzahlsignalen X ein Variatordrehzahlsignal W ermittelt und an die Stelleinrichtung 53 des Variatorantriebs 27 übermittel, der dann die jeweiligen Riemenscheiben 36, 37 öffnet oder schließt, sodass sich die Variatordrehzahl nvar in der Weise ändert, dass sich stets eine nahezu konstant bleibende Abtriebsdrehzahl nab an der Ausgangswelle 30 der Getriebestufe 24 einstellt.

Weiter liegt es im Rahmen der Erfindung, dass das mechanisch-mechanisch leistungsverzweigte Getriebe 25 anstelle des Zugmittelgetriebes 26 ein nicht näher dargestelltes Zahnradgetriebe umfaßt. Andererseits ist es aber auch denkbar, dass anstelle des Variatorantriebs ein an sich bekannter und hier deshalb nicht im Detail beschriebener Kettenwandler eingesetzt wird, um die beschriebenen Effekte, nämlich die Änderung der Motordrehzahl nmot bei nahezu unveränderter Abtriebsdrehzahl nab an der Ausgangswelle 30 der erfindungsgemäßen Getriebestufe 24 zu ermöglichen. Zudem kann das mechanisch-mechanisch leistungsverzweigte Getriebe 25 eine dezentrale Struktur in der Form aufweisen, dass zumindest jeweils ein Stufenlosgetriebe 43 dezentral dem jeweiligen Arbeitsorgan 5 zugeordnet ist. Dies hätte einerseits den Vorteil, dass ein Summiergetriebe 42 entfallen und die zum Teil ohnehin vorhandenen Variatorantriebe der Arbeitsorgane 5 unmittelbar zur individuellen Drehzahlanpassung genutzt werden könnten. Zum anderen müsste bei einer derartigen Ausgestaltungsvariante für jedes Arbeitsorgan 5 ein Stufenlosgetriebe 43 und entsprechende Drehzahlüberwachungs- und Regeleinrichtungen vorgehalten werden.

Fährt die selbstfahrende Arbeitsmaschine 1 schließlich auf der Straße sind in der Regel alle Arbeitsorgane 5 bis auf den Fahrantrieb 16 außer Betrieb. In diesem Fall kann in einer Ausgestaltungsvariante auch vorgesehen sein, dass zum Antrieb der nicht dargestellten Pumpe des Fahrantriebs 16 unmittelbar die Variatordrehzahl nvar an der Zwischenwelle 29 der Getriebestufe 24 abgegriffen wird und die Drehzahl der Förderpumpe des Fahrantriebs 16 so erhöht, dass auch bei niedriger Motordrehzahl nmot eine ausreichende Förderleistung der Pumpe sichergestellt wird.

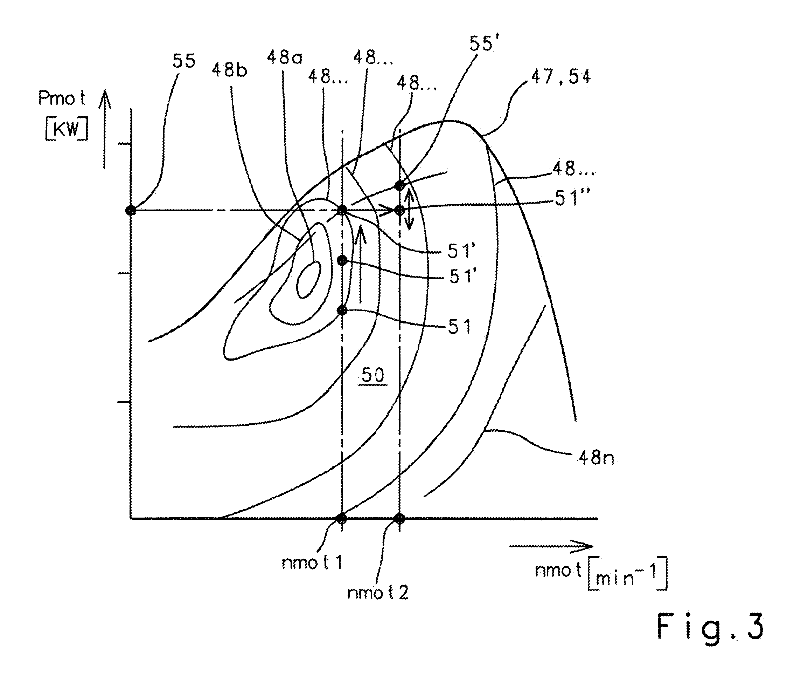

Fig. 3 beschreibt nun das erfindungsgemäße Verfahren anhand einer detaillierten Motorkennfelddarstellung. In Abhängigkeit von der Motorleistung Pmot und der Motordrehzahl nmot zeigt das Diagramm zunächst eine Motorkennlinie 47, hier die sogenannte Abregelkennlinie 54, und eine Vielzahl von Kraftstoffverbrauchskennlinien 48, wobei der Kraftstoffverbrauch von Kraftstoffverbrauchskennlinie 48a zu 48n zunimmt. Nach dem erfindungsgemäßen Verfahren ist vorgesehen, dass die Motordrehzahl nmot des zumindest einen Antriebsmotors 14 solange konstant in einer ersten Motordrehzahlstufe nmot1 gehalten wird, bis ein Leistungsbedarfsschwellwert 55 erreicht wird und beim Überschreiten dieses Leistungsbedarfsschwellwertes 55 in eine nächste Motordrehzahlstufe nmot2 umgeschaltet wird. Je nach Leistungsbedarf der Antriebsorgane 5 der selbstfahrenden Arbeitsmaschine 1 wird der Antriebsmotor 14 nach Fig. 3 in einem Betriebspunkt 51 bei einer Motordrehzahl nmot 1 betrieben. Steigt nun beispielsweise aufgrund eines höheren von den Arbeitsorganen 5 eines Mähdreschers 2 zu verarbeitendem Erntegutdurchsatzes oder zunehmender Steigung eines zu befahrenden Territoriums der Leistungsbedarf der Arbeitsorgane 5, wird der Betriebspunkt 51 des Antriebsmotors 14 unter Beibehaltung der momentanen Motordrehzahl nmot1 zu einem Betriebspunkt 51' mit höherer Motorleistung Pmot verschoben. Entspricht schließlich der momentane Betriebspunkt 51' dem Leistungsbedarfsschwellwert 55, bewirkt die Motorsteuereinheit 44 im Zusammenspiel mit der bereits beschriebenen Steuer- und Regeleinheit 45 ein Überführen des Betriebspunktes 51, 51' in einen im Motordrehzahlbereich nmot2 liegenden Betriebspunkt 51", wobei sich im Motordrehzahlbereich nmot 2 dann eine geänderter Leistungsbedarfsschwellwert 55' ergibt. Auf diese Weise kann der Antriebsmotor 14 stets in einem, einen niedrigen Kraftstoffverbrauch sicherstellenden Teillastbereich 50 betrieben werden.

Damit auch bei kurzeitigen Lastspitzen ein Abwürgen des Antriebsmotors durch Nutzung einer Leistungsreserve vermieden wird, liegen die Leistungsbedarfsschwellwerte 55 unterhalb der Abregelkennlinie 54, vorzugsweise 20% unter der die Abriegelkennlinie 54 definierenden Motorleistung Pmot. In Abhängigkeit von der aus den Leistungsbedarfssignalen Z ermittelten erforderlichen Motorleistung Pmot bewirken die zuvor beschriebene Steuer- und Regeleinheit 45 im Zusammenwirken mit der Motorsteuereinheit 44 ein automatisches Überführen des Antriebsmotors in den niedrigst möglichen Motordrehzahlbereich. Dabei wird in der bereits beschriebenen Weise über das Stufenlosgetriebe 43 die Abtriebsdrehzahl nab der Ausgangswelle der erfindungsgemäßen Getriebestufe 24 nahezu konstant gehalten.

Um einen hohen Wirkungsgrad des mechanisch-mechanisch leistungsverzweigten Getriebes 25 und damit einen niedrigen Kraftstoffverbrauch des Antriebsmotors 14 innerhalb eines großen Bereiches der Motordrehzahl nmot sicherzustellen, nimmt der von dem Stufenlosgetriebe 43 übertragene Motorleistungsanteil mit zunehmender Motordrehzahl nmot ab.

### Bezugszeichenliste:

- 1: Selbstfahrende Arbeitsmaschine
- 2: Mähdrescher
- 3: Getreideschneidwerk
- 4: Erntegut
- 5: Arbeitsorgan
- 6: Dreschtrommel
- 7: Dreschorgan
- 8: Dreschkorb
- 9: Hordenschüttler
- 10: Trenneinrichtung
- 11: Reinigungseinrichtung
- 12: Siebebene
- 13: Reinigungsgebläse
- 14: Antriebsmotor
- 15: Antriebsstrangstruktur
- 16: Fahrantrieb
- 17: Laufrad
- 18: Vorderachse
- 19: Laufrad
- 20: Hinterachse
- 21: Schrägförderorgan
- 22: Schrägförderer
- 23: Ausgangswelle
- 24: Getriebestufe
- 25: leistungsverzwreigtes Getriebe
- 26: Zugmittelgetriebe
- 27: Variatorantrieb
- 28: Planetengetriebe
- 29: Zwischenwelle
- 30: Ausgangswelle
- 31: Sonnenrad
- 32: Riemenscheibe
- 33: Zugmittel
- 34: Riemenscheibe
- 35: Hohlrad
- 36: Riemenscheibe
- 37: Riemenscheibe
- 38: Planetenrad
- 39: Stegrad
- 40: Verbundkeilriemen
- 41: Eingangswelle
- 42: Summiergetriebe
- 43: Stufenlosgetriebe
- 44: Motorsteuereinheit
- 45: Steuer- und Regeleinheit
- 46: Drehmomentsensor
- 47: Motorkennlinie
- 48: Kraftstoffverbrauchskennlinie
- 49: Programmmodul
- 50: Teillastbereich
- 51: Betriebspunkt
- 52: Drehzahlsensor
- 53: Stelleinrichtung
- 54: Abregelkennlinie
- 55: Leistungsbedarfsschwellwert
- W: Variatordrehzahlsignal
- X: Drehzahlsignal
- Y: Steuersignal
- Z: Leistungsbedarfssignal
- nmot: Motordrehzahl
- nvar: Variatordrehzahl
- nab: Abtriebsdrehzahl
- Pmot: Motorleistung

## Patentansprüche

1. Selbstfahrende Arbeitsmaschine mit einer Motorregelung mit zumindest einem in der Drehzahl regelbaren Antriebsmotor und in den Drehzahlen einstellbar angetriebenen Arbeitsorganen, wobei die Regelung der Motordrehzahl in Abhängigkeit von der Belastung des oder der Antriebsmotoren erfolgt und wobei der zumindest eine Antriebsmotor mit einem oder mehreren Arbeitsorganen über einen Antriebsstrang gekoppelt ist und der Antriebsstrang zumindest eine Getriebestufe umfasst, die die Antriebsdrehzahl des oder der Arbeitsorgane konstant hält,
**dadurch gekennzeichnet,**
**dass** die zumindest eine Getriebestufe (24) als mechanisch-mechanisch leistungsverzweigtes Getriebe (25) ausgeführt ist.

2. Selbstfahrende Arbeitsmaschine mit einer Motorregelung nach Anspruch 1,
**dadurch gekennzeichnet,**
**dass** die Eingangswelle (41) der Getriebestufe (24) mit der Ausgangswelle (23) des zumindest einen Antriebsmotors (14) und die Ausgangswelle (30) der Getriebestufe (24) mit dem Antriebsstrang (15) zumindest eines Arbeitsorgans (5) gekoppelt sind und wobei die Änderung der Motordrehzahl (nmot) eine Änderung der Drehzahl (nab) der Ausgangswelle (30) der Getriebestufe (24) bewirkt und wobei die Anpassung der Drehzahl (nab) der Ausgangswelle (30) der Getriebestufe (24) in einem Drehzahlbereich stufenlos erfolgt.

3. Selbstfahrende Arbeitsmaschine mit einer Motorregelung nach einem der vorhergehenden Ansprüche,
**dadurch gekennzeichnet,**
**dass** das mechanisch - mechanisch leistungsverzweigte Getriebe (25) ein Zugmittelgetriebe (26) zur drehzahlkonstanten Übertragung eines Anteils der Antriebsleistung (Pmot) und ein Stufenlosgetriebe (43) zur drehzahlvariablen Übertragung eines weiteren Anteils der Antriebsleistung (Pmot) umfasst und wobei die Leistungsanteile in einem Summiergetriebe (42) des mechanisch - mechanisch leistungsverzweigten Getriebes (25) zusammengeführt werden.

4. Selbstfahrende Arbeitsmaschine mit einer Motorregelung nach Anspruch 3,
**dadurch gekennzeichnet,**
**dass** das Zugmittelgetriebe (26) als Riementrieb, das Stufenlosgetriebe (43) als Variatorantrieb (27) und das Summiergetriebe (42) als Planetengetriebe (28) ausgeführt sind.

5. Selbstfahrende Arbeitsmaschine mit einer Motorregelung nach Anspruch 4,
**dadurch gekennzeichnet,**
**dass** die der Ausgangswelle (30) der Getriebestufe (24) zugeordnete Riemenscheibe (34) des Zugmittelgetriebes (26) drehfest mit dem Hohlrad (35) des Planetengetriebes (28) und die der Ausgangswelle (30) der Getriebestufe (24) zugeordnete Riemenscheibe (37) des Variatorgetriebes (27) drehfest mit dem die Planetenräder (38) tragenden Stegrad (39) des Planetengetriebes (28) verbunden sind und wobei jeweils die weiter Riemenscheibe (32) des Zugmittelgetriebes (26) und die weitere Riemenscheibe (36) des Variatorgetriebes (27) drehfest mit der Ausgangswelle (23) des wenigstens einen Antriebsmotor (14) gekoppelt sind.

6. Selbstfahrende Arbeitsmaschine mit einer Motorregelung nach Anspruch 5,
**dadurch gekennzeichnet,**
**dass** die drehfest mit der Ausgangswelle (23) des wenigstens einen Antriebsmotors (14) gekoppelte weiter Riemenscheibe (32) des Zugmittelgetriebes (26) und die weitere Riemenscheibe (36) des Variatorgetriebes (27) über eine der Getriebestufe (24) zugeordnete Eingangswelle (41) drehfest mit der Ausgangswelle (23) des zumindest einen Antriebsmotors (14) verbunden sind.

7. Selbstfahrende Arbeitsmaschine mit einer Motorregelung nach einem der vorhergehenden Ansprüche,
**dadurch gekennzeichnet,**
**dass** eine Steuer- und Regeleinheit (45) vorgesehen ist, die den Leistungsbedarf des Antriebsstranges (15) und/oder der Arbeitsorgane (5) ermittelt und unter Berücksichtigung der Motorkennlinien (47) und der Kraftstoffverbrauchskennlinien (48) des oder der Antriebsmotoren (14) und der erforderlichen Motorleistung (Pmot) eine Motordrehzahl (nmot1, nmot2) im Teillastbereich (50) mit dem niedrigsten spezifischen Kraftstoffverbrauch ansteuert.

8. Selbstfahrende Arbeitsmaschine mit einer Motorregelung nach Anspruch 7,
**dadurch gekennzeichnet,**
**dass** in dem Verhältnis wie die Motordrehzahl (nmot1, nmot 2) erhöht oder abgesenkt wird die Drehzahl (nvar) des Stufenlosgetriebes (43) der zumindest einen Getriebestufe (24) abgesenkt oder erhöht wird.

9. Selbstfahrende Arbeitsmaschine mit einer Motorregelung nach Anspruch 2,
**dadurch gekennzeichnet,**
**dass** das mechanisch - mechanisch leistungsverzweigte Getriebe (25) ein Zahnradgetriebe zur drehzahlkonstanten Übertragung eines Anteils der Antriebsleistung (Pmot) und ein als Kettenwandler ausgeführtes Stufenlosgetriebe (43) zur drehzahlvariablen Übertragung eines weiteren Anteils der Antriebsleistung (Pmot) umfasst und wobei die Leistungsanteile in einem Summiergetriebe (42) des mechanisch - mechanisch leistungsverzweigten Getriebes (25) zusammengeführt werden.

10. Selbstfahrende Arbeitsmaschine mit einer Motorregelung nach einem der vorhergehenden Ansprüche,
**dadurch gekennzeichnet,**
**dass** jedem Arbeitsorgan (5) dezentral ein Stufenlosgetriebe (43) zur Drehzahlanpassung zugeordnet ist.

11. Verfahren zum Betreiben einer selbstfahrende Arbeitsmaschine mit einer Motorregelung mit zumindest einem in der Drehzahl regelbaren Antriebsmotor und in den Drehzahlen einstellbar angetriebenen Arbeitsorganen, wobei die Regelung der Motordrehzahl in Abhängigkeit von der Belastung des oder der Antriebsmotoren erfolgt und wobei der zumindest eine Antriebsmotor mit einem oder mehreren Arbeitsorganen über einen Antriebsstrang gekoppelt ist und der Antriebsstrang zumindest eine Getriebestufe umfasst, die die Antriebsdrehzahl des oder der Arbeitsorgane konstant hält,
**dadurch gekennzeichnet,**
**dass** die zumindest eine Getriebestufe (24) als mechanisch-mechanisch leistungsverzweigtes Getriebe (25) ausgeführt ist und die Motorregelung die Motordrehzahl (nmot) des zumindest einen Antriebsmotors (14) solange konstant hält, bis ein Leistungsbedarfsschwellwert (55) erreicht wird und beim Überschreiten dieses Leistungsbedarfsschwellwertes (55) in eine nächste Motordrehzahlstufe (nmot1, nmot2) umgeschaltet wird.

12. Verfahren zum Betreiben einer selbstfahrende Arbeitsmaschine mit einer Motorregelung einer selbstfahrenden Arbeitsmaschine nach Anspruch 11,
**dadurch gekennzeichnet,**
**dass** der Leistungsbedarfsschwellwert (55) unterhalb der Abregelkennlinie (54) des jeweiligen Antriebsmotors (14) liegt.

13. Verfahren zum Betreiben einer selbstfahrenden Arbeitsmaschine mit einer Motorregelung nach Anspruch 12,
**dadurch gekennzeichnet,**
**dass** der Leistungsbedarfsschwellwert (55) etwa 20 % unterhalb der Abregelkennlinie (54) des jeweiligen Antriebsmotors (14) liegt.

14. Verfahren zum Betreiben einer selbstfahrenden Arbeitsmaschine mit einer Motorregelung nach einem der Ansprüche 11 - 13,
**dadurch gekennzeichnet,**
**dass** in Abhängigkeit von dem Leistungsbedarf (Pmot) bei Erreichen des Leistungsbedarfschwellwertes (55) in eine höhere oder niedrigere Motordrehzahl (nmot1, nmot2) umgeschaltet wird.

15. Verfahren zum Betreiben einer selbstfahrenden Arbeitsmaschine mit einer Motorregelung nach einem der Ansprüche 11-14,
**dadurch gekennzeichnet,**
**dass** die Regelung der Motordrehzahl (nmot) sowie die Anpassung der Drehzahl (nvar) des Stufenlosgetriebes (43) durch die Motorsteuereinheit (44) und/oder die Steuer- und Regeleinheit (45) bewirkt wird.

16. Verfahren zum Betreiben einer selbstfahrenden Arbeitsmaschine mit einer Motorregelung nach einem der Ansprüche 11 - 15,
**dadurch gekennzeichnet,**
**dass** mit zunehmender Motordrehzahl (nmot) der Leistungsanteil (Pmot) des Stufenlosgetriebes (43) abnimmt.

17. Verwendung einer selbstfahrenden Arbeitsmaschine nach einem oder mehreren der Ansprüche 1 -10 in einem Verfahren zum Betreiben einer selbstfahrenden Arbeitsmaschine nach den Ansprüchen 11-16.

## Claims

1. A self-propelled working machine with an engine regulating system having at least one drive engine which can be regulated in the rotary speed and drive members driven adjustably in the speeds of rotation, wherein regulation of the engine rotary speed is effected in dependence on the loading of the drive engine or engines and wherein the at least one drive engine is coupled to one or more drive members by way of a drive train and the drive train includes at least one transmission stage which keeps the drive rotary speed of the working member or members constant,
**characterised in that**
the at least one transmission stage (24) is in the form of a mechanically-mechanically power-split transmission (25).

2. A self-propelled working machine with an engine regulating system according to claim 1 **characterised in that** the input shaft (41) of the transmission stage (24) is coupled to the output shaft (23) of the at least one drive engine (14) and the output shaft (30) of the transmission stage (24) is coupled to the drive train (15) of at least one working member (5) and wherein the change in the engine rotary speed (nmot) causes a change in the rotary speed (nab) of the output shaft (30) of the transmission stage (24) and wherein adaptation of the rotary speed (nab) of the output shaft (30) of the transmission stage (24) is effected steplessly in a rotary speed range.

3. A self-propelled working machine with an engine regulating system according to one of the preceding claims **characterised in that** the mechanically-mechanically power-split transmission (25) includes a pulling means transmission (26) for the rotary speed-constant transmission of a proportion of the drive power (Pmot) and a stepless transmission (43) for rotary speed- variable transmission of a further proportion of the drive power (Pmot) and wherein the power proportions are combined in a summing transmission (42) of the mechanically-mechanically power-split transmission (25).

4. A self-propelled working machine with an engine regulating system according to claim 3 **characterised in that** the pulling means transmission (26) is in the form of a belt drive, the stepless transmission (43) is in the form of a variator drive (27) and the summing transmission (42) is in the form of a planetary transmission (28).

5. A self-propelled working machine with an engine regulating system according to claim 4 **characterised in that** the belt pulley (34) of the pulling means transmission (26), that is associated with the output shaft (30) of the transmission stage (24), is non-rotatably connected to the ring gear (35) of the planetary transmission (28) and the belt pulley (37) of the variator transmission (27), that is associated with the output shaft (30) of the transmission stage (24), is non-rotatably connected to the planet carrier (39) of the planetary transmission (28), that carries the planet wheels (38), and wherein the further belt pulley (32) of the pulling means transmission (26) and the further belt pulley (36) of the variator transmission (27) are respectively non-rotatably coupled to the output shaft (23) of the at least one drive engine (14).

6. A self-propelled working machine with an engine regulating system according to claim 5 **characterised in that** the further belt pulley (32) of the pulling means transmission (26), that is coupled non-rotatably to the output shaft (23) of the at least one drive engine (14) and the further belt pulley (36) of the variator transmission (27) are non-rotatably connected to the output shaft (23) of the at least one drive engine (14) by way of an input shaft (41) associated with the transmission stage (24).

7. A self-propelled working machine with an engine regulating system according to one of the preceding claims **characterised in that** there is provided a control and regulating unit (45) which ascertains the power demand of the drive train (15) and/or the working members (5) and having regard to the engine characteristics (47) and the fuel consumption characteristics (48) of the drive engine or engines (14) and the required engine power (Pmot) actuates an engine rotary speed (nmot1, nmot2) in the part-load range (50) with the lowest specific fuel consumption.

8. A self-propelled working machine with an engine regulating system according to claim 7 **characterised in that** the rotary speed (nbar) of the stepless transmission (43) of the at least one transmission stage (24) is lowered or raised in the ratio as the engine rotary speed (nmot1, nmot2) is raised or lowered.

9. A self-propelled working machine with an engine regulating system according to claim 2 **characterised in that** the mechanically-mechanically power-split transmission (25) includes a gear transmission for rotary speed-constant transmission of a proportion of the drive power (Pmot) and a stepless transmission (43) in the form of a chain converter for rotary speed-variable transmission of a further proportion of the drive power (Pmot) and wherein the power proportions are combined in a summing transmission (42) of the mechanically-mechanically power-split transmission (25).

10. A self-propelled working machine with an engine regulating system according to one of the preceding claims **characterised in that** a stepless transmission (43) for rotary speed adaptation is decentrally associated with each working member (5).

11. A method of operating a self-propelled working machine with an engine regulating system having at least one drive engine which can be regulated in the rotary speed and drive members driven adjustably in the speeds of rotation, wherein regulation of the engine rotary speed is effected in dependence on the loading of the drive engine or engines and wherein the at least one drive engine is coupled to one or more drive members by way of a drive train and the drive train includes at least one transmission stage which keeps the drive rotary speed of the working member or members constant,
**characterised in that**
the at least one transmission stage (24) is in the form of a mechanically-mechanically power-split transmission (25) and the engine regulation keeps the engine rotary speed (nmot) of the at least one drive engine (14) constant until a power demand threshold value (55) is reached and is switched over into a next engine rotary speed stage (nmot1, nmot2) when said power demand threshold value (55) is exceeded.

12. A method of operating a self-propelled working machine with an engine regulating system of a self-propelled working machine according to claim 11 **characterised in that** the power demand threshold value (55) is below the regulating-down characteristic (54) of the respective drive engine (14).

13. A method of operating a self-propelled working machine with an engine regulating system of a self-propelled working machine according to claim 12 **characterised in that** the power demand threshold value (55) is about 20% below the regulating-down characteristic (54) of the respective drive engine (14).

14. A method of operating a self-propelled working machine with an engine regulating system according to one of claims 11 to 13 **characterised in that** switching-over to a higher or lower engine rotary speed (nmot1, nmot2) is effected in dependence on the power demand (Pmot) when the power demand threshold value (55) is reached.

15. A method of operating a self-propelled working machine with an engine regulating system according to one of claims 11 to 14 **characterised in that** regulation of the engine rotary speed (nmot) and adaptation of the rotary speed (nvar) of the stepless transmission (43) is implemented by the engine control unit (44) and/or the control and regulating limit (45).

16. A method of operating a self-propelled working machine with an engine regulating system according to one of claims 11 to 15 **characterised in that** the power proportion (Pmot) of the stepless transmission (43) decreases with increasing engine rotary speed (nmot).

17. Use of a self-propelled working machine according to one or more of claims 1 to 10 in a method of operating a self-propelled working machine according to claims 11 to 16.

## Revendications

1. Machine de travail automotrice dotée d'un réglage de moteur avec au moins un moteur d'entraînement dont le régime est réglable et des organes de travail entraînés, dont les régimes sont réglables, le réglage du régime du moteur étant effectué en fonction de la charge du ou des moteurs d'entraînement et l'au moins un moteur d'entraînement étant couplé à un ou plusieurs organes de travail via un groupe propulseur et le groupe propulseur comportant au moins un rapport de démultiplication qui stabilise le régime d'entraînement du ou des organes de travail, **caractérisée en ce que** l'au moins un rapport de démultiplication (24) est réalisé comme un engrenage à la puissance dérivée de manière mécanomécanique.

2. Machine de travail automotrice dotée d'un réglage de moteur selon la revendication 1,
**caractérisée en ce**
**que** l'arbre d'entrée (41) du rapport de démultiplication (24) est couplé à l'arbre de sortie (23) de l'au moins un moteur d'entraînement (14) et l'arbre de sortie (30) du rapport de démultiplication (24) est couplé au groupe propulseur (15) d'au moins un organe de travail (5) et la modification du régime du moteur (nmot) provoquant une modification du régime (nab) de l'arbre de sortie (30) du rapport de démultiplication (24) et l'adaptation du régime (nab) de l'arbre de sortie (30) du rapport de démultiplication (24) étant effectuée dans une gamme de régimes en continu.

3. Machine de travail automotrice dotée d'un réglage de moteur selon l'une quelconque des revendications précédentes,
**caractérisée en ce**
**que** l'engrenage (25) à puissance dérivée de manière mécanomécanique comporte un engrenage de mécanisme de traction (26) pour la transmission en régime constant d'une partie de la puissance de propulsion (Pmot) et un engrenage à réglage continu (43) pour la transmission en régime variable d'une autre partie de la puissance de propulsion (Pmot) et les parties de puissance étant réunies dans un engrenage cumulatif (42) de l'engrenage à puissance dérivée de manière mécanomécanique.

4. Machine de travail automotrice dotée d'un réglage de moteur selon la revendication 3,
**caractérisée en ce**
**que** l'engrenage de mécanisme de traction (26) est réalisé comme un entraînement à courroie, l'engrenage à réglage continu (43) comme un entraînement d'engrenage à vitesse variable (27) et l'engrenage cumulatif (42) comme un engrenage planétaire (28).

5. Machine de travail automotrice dotée d'un réglage de moteur selon la revendication 4,
**caractérisée en ce**
**que** la poulie à courroie (34) associée à l'arbre de sortie (30) du rapport de démultiplication (24) de l'engrenage de mécanisme de traction (26) est reliée de manière solidaire en rotation à la couronne (35) de l'engrenage planétaire (28) et la poulie à courroie (37) associée à l'arbre de sortie (30) du rapport de démultiplication (24) de l'engrenage à vitesse variable (27) est reliée de manière solidaire en rotation à la roue de traverse (39) portant les roues planétaires (38) de l'engrenage planétaire (28) et respectivement l'autre poulie à courroie (32) de l'engrenage de mécanisme de traction (26) et l'autre poulie à courroie (36) de l'engrenage à vitesse variable (27) étant couplées de manière solidaire en rotation à l'arbre de sortie (23) de l'au moins un moteur d'entraînement (14).

6. Machine de travail automotrice dotée d'un réglage de moteur selon la revendication 5,
**caractérisée en ce**
**que** l'autre poulie à courroie (32) couplée de manière solidaire en rotation à l'arbre de sortie (23) de l'au moins un moteur d'entraînement (14) de l'engrenage de mécanisme de traction (26) et l'autre poulie à courroie (36) de l'engrenage à vitesse variable (27) sont reliées par un arbre d'entrée (41) associé au rapport de démultiplication (24) de manière solidaire en rotation à l'arbre de sortie (23) de l'au moins un moteur d'entraînement (14).

7. Machine de travail automotrice dotée d'un réglage de moteur selon l'une quelconque des revendications précédentes,
**caractérisée en ce**
**qu'**une unité de commande et de régulation (45) est prévue, laquelle détermine le besoin en puissance du groupe propulseur (15) et/ou des organes de travail (5) et commande en tenant compte des caractéristiques du moteur (47) et des caractéristiques de consommation en carburant (48) du ou des moteurs d'entraînement (14) et de la puissance du moteur (Pmot) nécessaire, un régime du moteur (nmot1, nmot2) dans la plage de charge partielle (50) avec la consommation en carburant spécifique la plus basse.

8. Machine de travail automotrice dotée d'un réglage de moteur selon la revendication 7,
**caractérisée en ce**
**que** vu comment le régime du moteur (nmot1, nmot2) est augmenté ou abaissé, le régime (nvar) de l'engrenage à réglage continu (43) de l'au moins un rapport de démultiplication (24) est abaissé ou est augmenté.

9. Machine de travail automotrice dotée d'un réglage de moteur selon la revendication 2,
**caractérisée en ce**
**que** l'engrenage (25) à puissance dérivée de manière mécanomécanique comporte un engrenage pour la transmission en régime constant d'une partie de la puissance de propulsion (Pmot) et un engrenage à réglage continu (43) réalisé comme un convertisseur à chaîne pour la transmission en régime variable d'une autre partie de la puissance de propulsion (Pmot) et les parties de puissance étant réunies dans un engrenage cumulatif (42) de l'engrenage (25) à puissance dérivée de manière mécanomécanique.

10. Machine de travail automotrice dotée d'un réglage de moteur selon l'une quelconque des revendications précédentes,
**caractérisée en ce**
**qu'**un engrenage à réglage continu (43) est associé à chaque organe de travail (5) de manière décentralisée pour l'adaptation au régime.

11. Procédé d'exploitation d'une machine de travail automotrice dotée d'un réglage de moteur avec au moins un moteur d'entraînement dont le régime est réglable et des organes de travail entraînés, dont les régimes sont réglables, le réglage du régime du moteur étant effectué en fonction de la charge du ou des moteurs d'entraînement et l'au moins un moteur d'entraînement étant couplé à un ou plusieurs organes de travail via un groupe propulseur et le groupe propulseur comportant au moins un rapport de démultiplication qui stabilise le régime d'entraînement du ou des organes de travail,
**caractérisé en ce**
**que** l'au moins un rapport de démultiplication (24) est réalisé comme un engrenage à puissance dérivée de manière mécanomécanique et le réglage du moteur stabilise le régime du moteur (nmot) de l'au moins un moteur d'entraînement (14) jusqu'à ce qu'une valeur seuil de besoin en puissance (55) soit atteinte et lors du dépassement de cette valeur seuil de besoin en puissance (55) soit commuté dans un rapport de régime du moteur suivant (nmot1, nmot2).

12. Procédé d'exploitation d'une machine de travail automotrice dotée d'un réglage de moteur d'une machine de travail automotrice selon la revendication 11,
**caractérisé en ce**
**que** la valeur seuil de besoin en puissance (55) est inférieure à la caractéristique de coupure du débit (54) du moteur d'entraînement respectif (14).

13. Procédé d'exploitation d'une machine de travail automotrice dotée d'un réglage de moteur selon la revendication 12,
**caractérisé en ce**
**que** la valeur seuil de besoin en puissance (55) est inférieure environ de 20 % à la ligne caractéristique de coupure du débit (54) du moteur d'entraînement respectif (14).

14. Procédé d'exploitation d'une machine de travail automotrice dotée d'un réglage de moteur selon l'une quelconque des revendications 11 à 13,
**caractérisé en ce**
**qu'**en fonction du besoin en puissance (Pmot) lors de l'atteinte de la valeur seuil de besoin en puissance (55), il est commuté dans un régime du moteur plus élevé ou plus bas (nmot1, nmot2).

15. Procédé d'exploitation d'une machine de travail automotrice dotée d'un réglage de moteur selon l'une quelconque des revendications 11 à 14, **caractérisé en ce que** le réglage du régime du moteur (nmot) ainsi que l'adaptation du régime (nvar) de l'engrenage à réglage continu (43) sont provoqués par l'unité de commande du moteur (44) et/ou l'unité de commande et de régulation (45).

16. Procédé d'exploitation d'une machine de travail automotrice dotée d'un réglage de moteur selon l'une quelconque des revendications 11 à 15,
**caractérisé en ce**
**que** la partie de puissance (Pmot) de l'engrenage à réglage continu (43) décroît en même temps que le régime du moteur (nmot) croît.

17. Utilisation d'une machine de travail automotrice selon l'une ou plusieurs quelconques des revendications 1 à 10 dans un procédé d'exploitation d'une machine de travail automotrice selon les revendications 11 à 16.
